# EUROPEAN PATENT SPECIFICATION

(11) **EP 2 367 132 B1**
(45) Date of publication and mention of the grant of the patent: **11.11.2015**
(21) Application number: 11157935.5
(22) Date of filing: 11.03.2011
(51) Int. Cl.: G06F 21/10, G06Q 30/02, G06Q 50/18, H04L 29/06

(54) **Automated rules-based rights resolution**
Automatisierte regelbasierte Rechteauflösung
Résolution de droits à base de règles automatiques

(30) Priority: 16.03.2010 US 724859
(43) Date of publication of application: 21.09.2011
(73) Proprietor: Copyright Clearance Center, Inc., Danvers, MA 01923 (US)
(72) Inventor: Meyer, Keith, Southborough, MA 01772 (US)
(74) Representative: Puschmann Borchert Bardehle Patentanwälte Partnerschaft mbB

(56) References cited:
- WO-A2-2007/012999
- US-A1- 2002 165 799
- US-A1- 2002 173 976
- US-B1- 6 484 149
- US-B1- 6 618 808
- US-B1- 7 136 838

## Description

This invention relates to methods and apparatus for determining reuse rights for content to which multiple licenses and subscriptions apply. Works, or "content", created by an author is generally subject to legal restrictions on reuse. For example, most content is protected by copyright. A copyright is actually a "bundle" of rights, including rights to present the content in different formats, rights to reproduce the content in different formats, rights to produce derivative works, etc. A single copyrighted work can potentially be divided into any number of uses with an equal number of associated rights, including uses that have not yet been invented. For example, digital and Internet uses, such as posting a work on a web site could not have been conceived of, granted or denied, prior to the existence of the technology, network infrastructure, and broad adoption of interconnected computers and other devices.

Each right may be retained by the author or assigned to another entity. The owner of a right, whether an author or another entity, is called a rightsholder. A rights consumer is any person or entity that purchases rights from the rightsholder. Rightsholders, such as publishers, authors, agents or owners of any kind of copyrighted material, can grant or deny any of the rights they own to rights consumers as well as providing conditions, pricing, and other stipulations relating to each right.

In this context, a valid right represents permission granted by a rightsholder to use content in a specified manner. A right can be attached to one or more works, collections of works or publishers of works and can also be attached to a flexible identifier that refers to an object in the real world such as a data source, file name, or URL. The availability of a right may be limited by one or more boundary parameters. In general, a right is considered valid for a prospective licensee, and therefore, permission for the specified reuse is granted to that licensee only when the boundary parameters for that licensee have predetermined values. Examples of these boundary parameters include licensee identifier, licensee type, or licensee location.

When a rightsholder or an agent authorized by a rightsholder to convey rights on their behalf receives a request for a particular use of a work, the request must be compared against license agreements that define the terms and conditions on which the right will be granted to the requester. Additionally, a determination must be made as to how much royalty should be paid and to whom. In some cases royalty is owed to more than one rightsholder. Consequently, processing that request may consume a significant amount of time, especially if the request is unusual, for extensive use, or a first-time request or the right requires interpretation of the types of use being requested. In some cases there are multiple, often conflicting, license agreements that may apply to the particular right requested. In such cases, a human operator must review the request against several licenses in order to make a determination whether the request can be granted, and under which license agreement. These operations are time-consuming and expensive.

US 6 618 808 B1 discloses an electronic rights management and authorization system to account for the dynamic, multi-dimensional, and granular nature of rights. A database structure divides works and rights into two related tables. A works table includes information sufficient to identify works managed by the system, while a rights table identifies a right associated with a work and includes one or more date fields delimiting the right. The rights table may also include type of use information. Additional tables, such as a work relation table, a party table, or an order table, may be provided. Software is used to manage and to query the database structure. The system has broad applicability to intellectual, real, and personal property; contract management; and similar items. The system may be implemented in standalone mode, through the client/server model of computing, or over the Internet.

US 6 484 149 B1 discloses a system and method for designing and operating an electronic store permit a merchant to organize and advertise descriptions of product inventory over the Internet, permit Web page information to be extracted on-demand from a product inventory database, and permit Web pages to be automatically customized to fit shopping behaviors of individual consumers. A graphical store design user interface of a Web browser displays a hierarchical representation of products and, product groups of an electronic store. A user manipulates icons of the Web browser store design user interface to cause a Web server to modify relationships between products and product groups stored in a product information database. A store designer creates HTML template files, embeds database and customize references within the template files, and assigns template files to groups or products of the electronic store. The Web server receives requests to access Web pages from consumers using standard Web browsers. The Web server opens a template file related to the requested Web page, creates hyperlinks and other information content by executing database references embedded within the template file, and merges the hyperlinks and content with the template file to generate an HTML Web page to send to the Web browser. The Web server automatically creates additional hyperlinks to any Web pages or products preferred by the consumer by executing customize instructions associated with customize references in a template file. To determine whether any products or Web pages are preferred by a consumer, the Web server examines a traffic analysis database and extracts the consumer's history of accesses to Web pages and orders of products. For each Web page the consumer has accessed, the Web server uses preferred page rules to determine whether the page was accessed with sufficient frequency to generate a hyperlink to the page. For each product the consumer ordered, the Web server uses preferred product rules to determine whether the product was ordered with sufficient frequency to generate a hyperlink to a page offering the product.

WO 2007/012999 provides a method for authorizing to use a content, comprising steps of generating a pointer directing to a location where storing a policy of the use rights of the content; and associating the pointer with the content. The invention allows the owner of the digital content to authorize the digital content users to use the digital content in real time and flexibly, thus to protect the intellectual property right of the digital content owner over the digital content.

What is needed is a method and an apparatus configured to avoid specific coding for each right.

For this purpose, the method of the invention has the features of claim 1, and the apparatus of the invention has the features of claim 14.

In accordance with the principles of the invention, a rules engine is driven by one or more stored "rules" to make rights determinations formerly made by a human operator; that is whether a request for a right can be granted, what price should be paid by the requestor and how much royalty should be paid to rightsholders. In order to avoid specific coding for each right, the rules and parameters necessary to make the required determinations are constructed to form a standard set of reusable modules that can be linked in different ways to process different rights.

In one embodiment, a graphic user interface that allows a user to request a right by designating a work and a type of use is controlled by additional display rules that are linked to the type of use in order to prompt the user for information needed to decide whether the request can be granted and to display to the user a determined price if the request is granted.

In another embodiment, additional processing rules validate information entered by the user into the graphical user interface, obtain additional information, if necessary, and select one right from a plurality of rights that may be available from different rightsholders for a selected work and type of use.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings
- Fig. 1: is a block schematic diagram illustrating the overall structure of a rules engine that is driven by stored rules and controls a display;
- Figs. 2A-2C: illustrate, in a schematic form, a plurality of tables and interrelationships between tables that form the rules database shown in Figure 1;
- Fig. 3: is a flowchart showing the steps in an illustrative process for configuring the database shown in Figures 2A-2C, and
- Figs. 4A-4E: when placed together, form a flowchart showing the steps in an illustrative process performed by the rules engine in responding to a rights request.

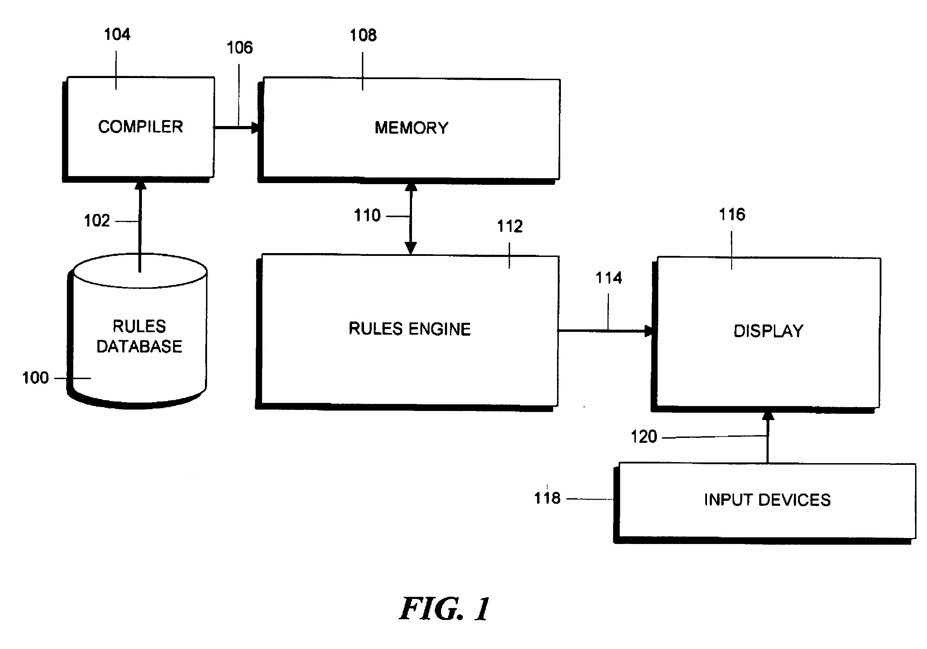

As shown in block schematic form in Figure 1, a plurality of rules stored in a rules database 100 control a rules engine 106 to determine whether a request for a right can be granted, what price should be paid by a requestor and how much royalty should be paid to the rightsholder. Under control of display rules, the rules engine 106 constructs a graphic user interface on display 110 that prompts the requestor for parameter values that are necessary to make the required determinations. Other rules receive parameter values from the requestor via input devices 108 and validate the received values. A further rule makes the required calculations and displays the results to the requestor via the graphic user interface on display 110. Although input devices 108 and display 110 are shown in Figure 1 as directly connected to rules engine 106, devices 108 and display 110 could be part of a remote computer which communicates, via a browser program and the Internet (not shown), with rules engine 106 that is operating in a server. In this case, the graphic user interface would be displayed by the browser and the input devices could be a mouse and keyboard. Such an arrangement is well-known to those skilled in the art.

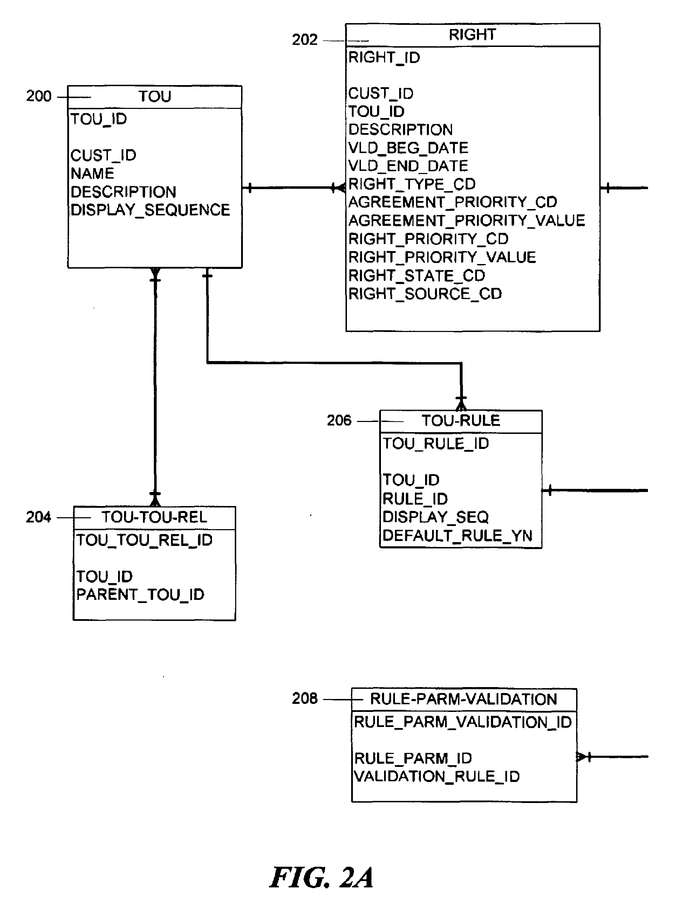

The arrangement of information in rules database 100 is shown in Figures 2A-2C and consists of thirteen related tables 200-224. Each table includes a primary, or unique, key and may include foreign keys or other information. For example, type-of-use (TOU) table 200 includes primary key field "toujd", a foreign key field "cust_id" and other information fields such as "name", "description" and "display_sequence". As is well-known to those skilled in the art, a first table may be related to a second table by including the primary key of the first table as a foreign key in the second table. These relationships are indicated in Figures 2A-2C by lines connecting the tables. A forked end on the line indicates a "many" relationship, that is, there are many foreign key field entries in the table to which the forked end is attached. Thus, a line with a single end and a forked end indicates a one-to-many relationship. Some tables, such as table 206, are linking tables that contain foreign keys from two tables. For example, linking table 206 contains foreign keys from the tou table 200 and the rule table 212. Linking table 206 has a one-to-one relationship with rule table 212, but a one-to-many relationship with tou table 200. Therefore, there may be many entries in linking table 206 with different tou_id entries, but the same rule_id entry.

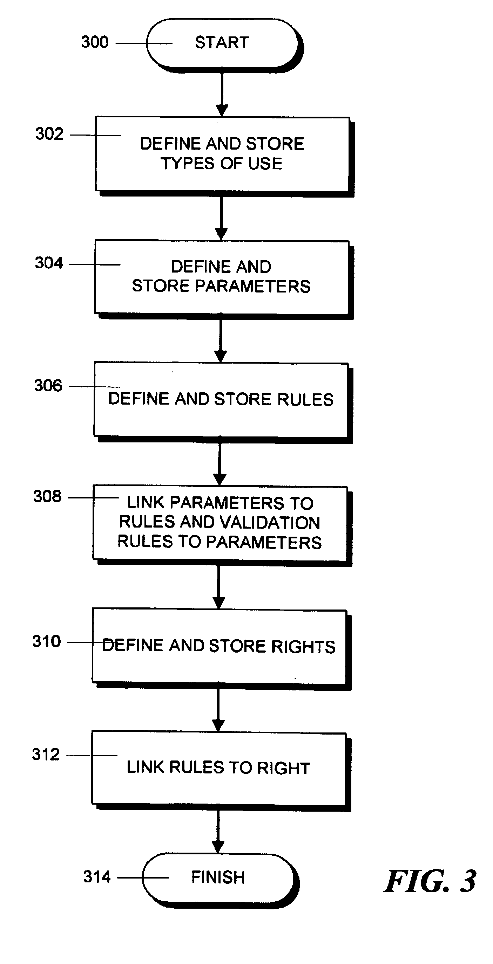

Figure 3 illustrates the process of configuring the rules database. This process begins in step 300 and proceeds to step 302 where types of use records are defined and stored. In general, types of use are predefined actions. An illustrative set of predefined types of use for a publication by members of an organization could include (1) emailing a copy of the publication to a member of the organization, (2) emailing a copy of the publication to a person who is not a member of the organization, (3) storing a copy of the publication on a local hard drive, (4) storing a copy of the publication on a shared network drive, (5) scanning and then emailing a copy of the publication to a member of the organization, (6) scanning and then emailing a copy of the publication to a person who is not a member of the organization, (7) photocopying the publication and sharing it with a member of the organization, (8) photocopying the publication and sharing with a person who is not a member of the organization, (9) sharing a printed copy of the publication with a member of the organization, (10) sharing a printed copy of the publication with a person who is not a member of the organization, (11) sharing a copy of the publication using Lotus Notes™, (12) uploading a copy of the publication to an Internet site, (13) posting a copy of the publication for advertising purposes and (14) uploading a copy of the publication to an electronic paper (soft billboard).

Each type of use is stored as a separate record in the tou table 200. A type of use can also contain child types of use and a child type of use can exist under more than one parent type of use. Rights that are associated with a parent type of use, automatically apply to the children. Where possible, it is most convenient to assign rights to parent types of use, saving the need to make assignments at each individual child level. In some cases, the rightsholder may only be providing permissions at a lower or more granular level, so it is necessary to individually configure child types of use. For example, a parent photocopy right may include the child rights of photocopy internally, photocopy externally, photocopy for library reserves, or photocopy for poster display. Where all rights apply, it is most convenient to configure them at the parent level of photocopy. If only a sub-set applies, such as photocopy internal, it is necessary to configure the rule at the child level. Parent-child relationships are stored in the tou_tou_relation table 204 which allows many-to-many relationships to be stored.

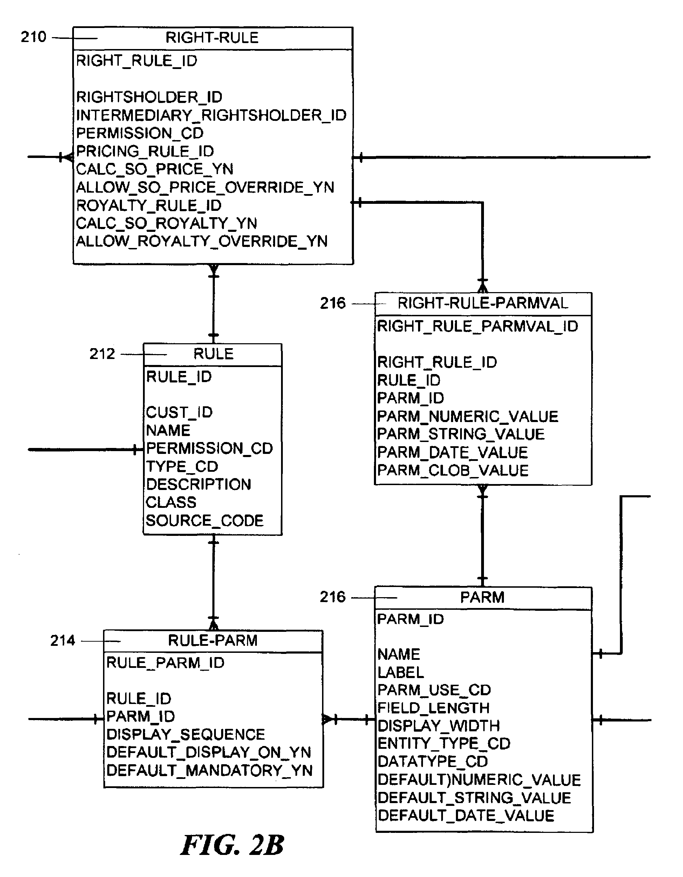

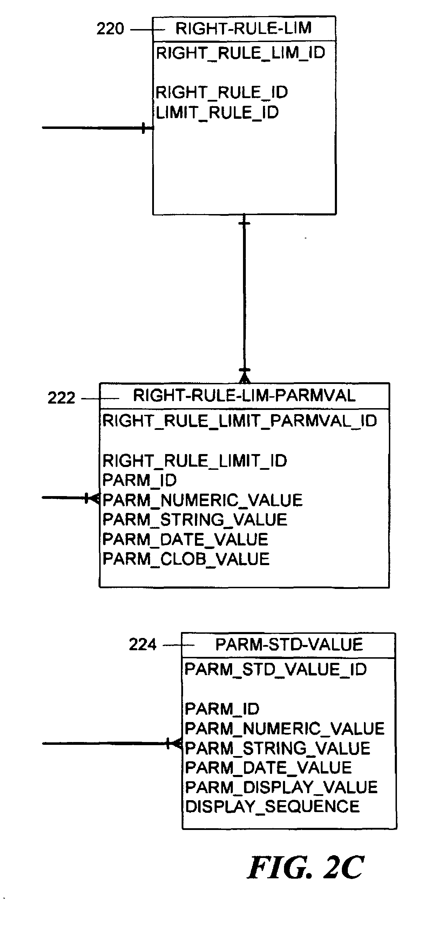

Returning to Figure 3, in step 304, parameters are defined and stored. A parameter is data that is associated with either a rule or a rights request. For example, a parameter that is associated with a rule might be a per page fee, whereas a parameter that is associated with a request might be the number of pages requested. A parameter definition contains a plurality of values that define the parameter, including a name value (to allow a rule or rights request to reference the parameter), a label value (to identify the parameter in a graphic user interface), a use code (indicates whether the parameter is used within a right or a rights request definition or is a reference parameter that is part of the definition of a rule. Reference parameters could alternatively be placed in the body of the rule code, but in that case they would not be readable by other rules), a field length (indicating the maximum number of characters of input information), a display width (indicating a default pixel value for the width of a control that displays the parameter in a graphic user interface), an entity type (indicating the entity to which the parameter is connected. An entity type of "rule" is most frequent but parameters can also be connected to a "work" or a "rightsholder"). Additional parameter definition values include a data type (which can be a string, integer, number, date, boolean, clob (character large object), or a composite data type such as a table) and a default value (allows an initial value to be displayed when displaying a control for the parameter) and a display sequence that indicates a default sequence in which parameters are displayed. These values are stored in corresponding fields in the parameter table 216 shown in Figure 2B. Additionally, parameters have an optional concept of standard values which permits predetermined values to be presented in a dropdown list control when the parameter is displayed. Standard values are stored in the standard value table 224 shown in Figure 2C and related to a parameter by including the parameter ID in the parm_id field in the parameter value table.

In step 306, rules are defined and stored. A rule is a block of software code that is executed as part of an orchestrated framework to perform a predetermined task. Rules are linked to a right to qualify the availability of the right, the nature of the offer (price) and the royalties payable (cost) as a result of the offer. The availability of a right is determined by the combination of boundary parameters such as a requestor type or location and limit rules (for example, a limit rule might limit usage to no more than five pages). Pricing rules execute when a grant decision has been made to calculate a price offered for the requested right from parameters taken from the request. Royalty rules execute when the calculated price has been paid to calculate a royalty to be paid to a rightsholder and special order rules execute to process a special order. In some cases, multiple rightsholders are associated with a single right. In such cases, a pricing rule can be assigned as a single global pricing rule or per rightsholder (prices added together) or a royalty rule may be assigned per rightsholder. In addition, limit rules can be assigned globally or per rightsholder.

Each rule type performs a calculation and returns one or more rule resolutions which represent the outcome of the rule. For example, a limit rule returns a LimitRuleResolution which includes a limit reached flag and a limit message. Multiple limit rules can be linked to a right and, if any limit is reached, the right is not available. Similarly, a pricing rule returns a list of PricingRuleResolution(s) which include a price type, price, message type and message to display to a user. There can be multiple prices returned in a pricing calculation (for example, price, service fee, foreign currency price, etc.) A royalty rule returns a list of RoyaltyRuleResolution(s) which include a price type, price, message type and message. A special order rule describes how to process a special order and returns a special order resolution which includes a special order valid flag, a message type and message.

In addition, in the inventive system, process rules control the request procedure and the resolution of the right. These latter rules include display rules that format and control a graphic user interface display to collect required information, validation rules that check and validate user inputs, pre-process rules that gather information in addition to that entered by a user, if necessary, and resolution rules that select a single right when the request matches a plurality of rights.

Display rules are linked to types of use. Each type of use will typically be linked to one display rule, but a single display rule may be linked to multiple types of use. A display rule typically defines the display parameters that are presented to the user and the order of presentation. Before and during presentation, the display rule may adjust attributes of display parameters to suit the display purpose. For example, the display rule may alter a text labels or cause the display to be refreshed in certain circumstances or modify other display attributes of a parameter. Alternatively, the display rule may display or not display "conditional" parameters based on the rule. For example, if an author flag parameter is set to "true", the display rule may display a prompt for a number of pages authored. The display rule also sets status flags based on user data entry. For example, during operation, the display rule may set flags indicating that the pricing rules should be run or that the request is complete and system is ready to add the item to a cart and subsequently accept payment from a user. Further, a flag on every DisplayParm parameter called the "refresh" flag can be used to re-execute the graphic user interface if the value of the parameter changes in the display. This allows for interactions where the presentation of a parameter is dependent on the selection of another parameter value.

Validation rules check an entered value of a parameter to insure that the value meets predefined criteria. Each validation rule is linked to a parameter. When that parameter is presented in the graphic user interface, the linked validation rules automatically execute. For example, a validation rule may check an entered parameter value to insure that the entered value is a positive integer. Another validation rule may check an entered date value to determine whether the value is within a reasonable date range. Validation rules return a validation message with a message type Code of <e>rror, <i>nformation and a message body for display in the graphic user interface. If there are validation errors, the error messages are displayed and the rules engine pauses until a new value is entered or processing is canceled.

Pre-process rules can optionally be linked to another rule and gather additional inputs if these additional inputs are needed. A pre-process rule can be set to execute before display or before resolution. The role of a pre-process rule is typically to connect to an external source such as a database, web service, or http request in order to gather additional information needed to resolve the rule. A pre-process rule will typically store information that has been gathered in <reference> parameters associated with the rule. It will also populate a preprocess message object with a message type code and a message body.

Post-process rules can optionally be linked to another rule to perform operations after the rule execution. This is a convenience feature that allows for standard operations that extend many rules. For example, a price may be calculated in US dollars, but often it is desirable to present that price in multiple currencies. In this case, a single post process rule can be defined and executed after every pricing rule where the offer should be in multiple currencies in order to convert the calculated price into applicable currencies.

Resolution rules choose which right to display to a user in cases where more than one right applies; these rules are typically linked to a type of use. Generally, a resolution rule will select the highest priority right, with the most actionable permission status that did not get eliminated by reaching a limit.

Rules are stored as records in the rule table 212 shown in Figure 2B. Each rule record contains a plurality of values including a name value, a description value, a type value, a class and a permission code. The type code indicates the rule type, which includes the values of pricing, royalty, limit, special order, display, validation, resolution, preprocess, and postprocess. The class value is the name of the object class that will be created to execute the rule. The permission code value indicates the permission status under which the rule is used. Values include grant, preauthorized purchase, link (to a rights determination website), public domain and contact rightsholder. These values are stored in appropriate fields in the rule table 212.

Each rule comprises software code that executes to combine the values of predetermined parameters to perform a predetermined task. The rule is stored as a record in rule table 212 with a clob field (source_code) for holding a block of source code text. Java based rules are compiled using a conventional compiler at definition time and both the source code and byte code (executable) are stored. When a rule is needed, the executable code is retrieved and instantiated into a map object in the global application area in memory 104. The rule instance is then retrieved by name from the map object and executed. The framework allows for non-Java (interpreted) rules to follow the same pattern with the difference being that the source code is instantiated into the global application area instead of byte code compiled classes.

An example of software source code for a pricing rule is the following code written in Java:

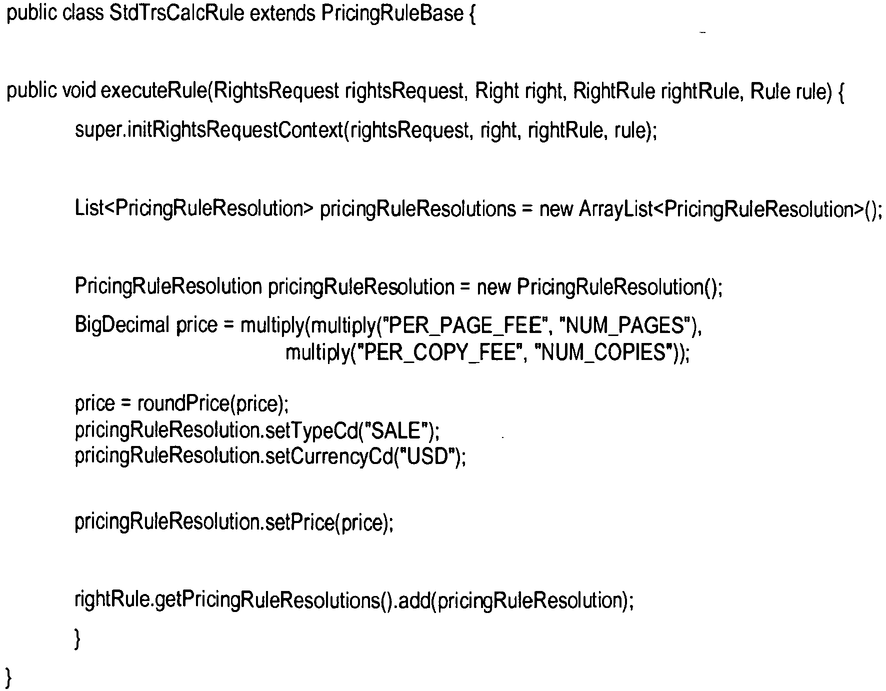

The code as shown above has been written using a class hierarchy with a base class called RuleBase. Subclasses of this base class include <RuleType>Base (for example, PricingRuleBase, RoyaltyRuleBase, DisplayRuleBase) and inherit functions defined in the base class. As a result of this class library, the software code for every rule has a series of functions available to it. In the pricing rule case, many of these functions are math oriented like "add", "multiply", and "round". These functions allow the rule software to access related parameters by name as illustrated in the example above (for example, the clause: multiply("PER_PAGE_FEE", "NUMBER_OF_PAGES")). In addition to providing simplicity and convenience for rule software development, these functions provide the service of automatically logging the operations that take place for traceability and standardizing operations to support interpreted scripting mechanisms.

The framework injects context into the rule as illustrated by the rule signature shown above where the RightsRequest, Right, RightRule, and Rule objects are part of the call signature. Therefore, the rule software has access to all variables that make up the context of its execution. Accordingly, in the rules execution flow that takes place in the rules engine, it is possible to reference not only the rule parameters that define the right and the request parameters that were entered by the user, but also information about the type of use selected, the work, the rightsholder, the current right, the other rights that were found, and the results of other calculations (for example, the royalty rule often requires the price calculated by corresponding pricing rule).

The next step 308 in the process of configuring the rules database is to link parameters to rules. A parameter can be linked to multiple rules and can accept default values for the context of the rule. Parameters are linked to a rule by inserting one or more entries into the rule_parm linking table 214 in the case of pricing, royalty and special order rules and into the right_rule_lim_parmval linking table in the case of limit rules. These entries can be generated by a conventional rule maintenance graphic user interface display. Each entry includes the rule and parameter identifier for the linked pair. In addition, validation rules can be linked to parameters for the context of the rule. This is accomplished by placing an entry into the rule_parm_validation linking table 208 including identifiers of the rule_parm link and the appropriate validation rule. A validation rule will be run after a parameter value has been entered by a user in order to check the validity of the entered information.

Next, in step 310, rights are defined and stored as records in the rights table 202. Each right is related to a type of use by including the type of use ID in the record that stores that right. As indicated in Figure 2A, a plurality of rights may be related to each type of use. A right can be connected to one or more works, collections of works, boundary parameters (for example, the right may be valid only for a given licensee type), locations (for example, the right may only be valid where the user is located in Great Britain) or to an flexible identifier (for example, a data source, file name or URL). These connections are established by adding values in the appropriate fields in the record representing the right in the right table 202. Rights may also be associated with a particular customer by including a customer ID in the right table record.

Rights can be created from scratch, or from right templates. Right templates are simply pre-configured rights that can be copied and subsequent edited. These right templates include a standard right, which is a right that is pre-configured and can be "linked to", a standard rightsholder right, which is a right where the rightsholders are pre-configured but all other values can be modified, a standard rightsholder rule right, which is a right where the rightsholder and linked rules are pre-configured but other parameters can be modified and a standard rule parameters right, which is a right where the rules and parameters are pre-configured but the rightsholder can be modified.

All types of rights can have zero, one or more terms associated. Terms can be created free-form or linked to from standard terms in a manner similar to standard rights. Terms can also be considered informational (non-restrictive) or restrictive, which may be a factor in determining which right to choose when there is a plurality of valid rights.

Every right is assigned a priority based on its source, which priority is stored in the right_priority_cd and right_priority_value fields. The priority value permits a selection of one right over another regardless of whether the right grants permission for the type of use or not. When multiple rights are found covering a desired work, generally only rights with priorities that match the highest priority found are considered. For example, if a first right has higher priority than a second right and both rights result in a grant for a type of use, if the first right is eliminated because a limit is reached as discussed below, the second right would still not be considered because it is not on the same level as the highest level found.

An agreement is an optional concept associated with a right; a right can exist inside an agreement or outside an agreement. In many cases, an agreement is simply a convenient grouping mechanism for rightsholders and rights. When configuring rights within an agreement, there is data entry efficiency to only seeing rightsholders, templates, standard rights, and rights assignment groups that are attached to that agreement. Other than data organization the agreement concept serves the occasional need to implement sophisticated rights prioritization constructs such as exception lists.

Rights within an agreement have a right priority. If an agreement is associated with a right, an agreement priority code and value are stored in the agreement_priority_cd and agreement_priority_value fields respectively. Exemplary values of right priority are No override, Normal (Less granular), Same Level, More Granular, All. Granularity results from the work or works to which a right is connected. Rights connected directly to works are considered to be the most granular; rights connected to collections are considered to be less granular. In most cases, the right priority of Normal applies, indicating that, within an agreement, a more granular right has higher priority that a less granular right. For example, if a work exists in a collection within an agreement and the collection is connected to a first right, and that work is directly connected to a second right in the agreement, then the second right has higher priority than the first right because the second right is more granular. In other cases, an exception collection might be specified, where inclusion in one collection has a higher priority than inclusion in another collection.

The next step 312 in the process of configuring the rules database is to link rules to rights. Right-related rule types (pricing, royalty and special order) are linked to a right by inserting entries for each type of rule into the right_rule linking table 210 with identifiers of the right and the various rule types. Limit rules are linked to right by inserting entries into the right_rule_lim linking table 220. For transactional rights, typically there is a single pricing rule, a single royalty rule, and zero, one, or more than one limit rules. After linking rules to rights, the configuration process finishes in step 314.

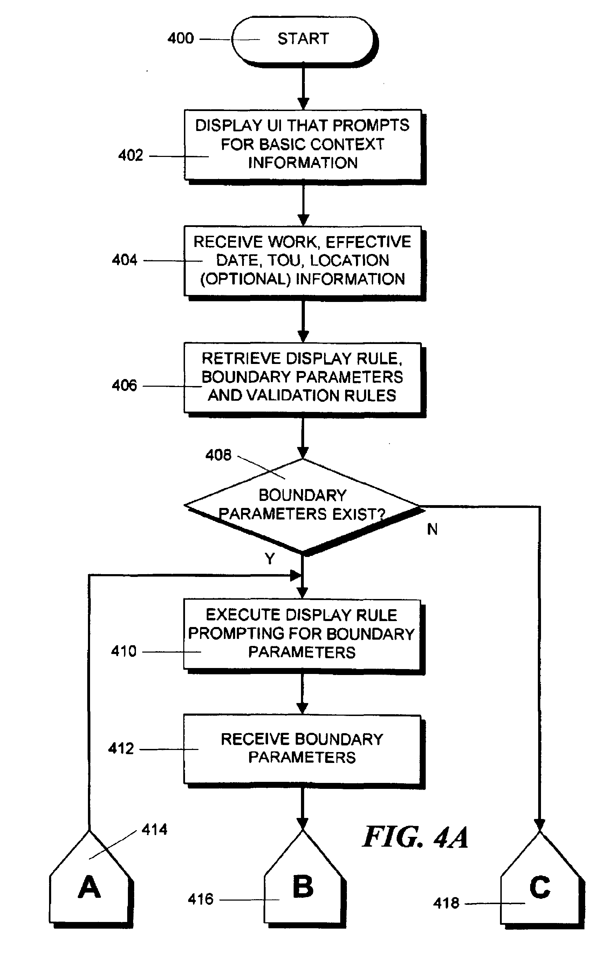

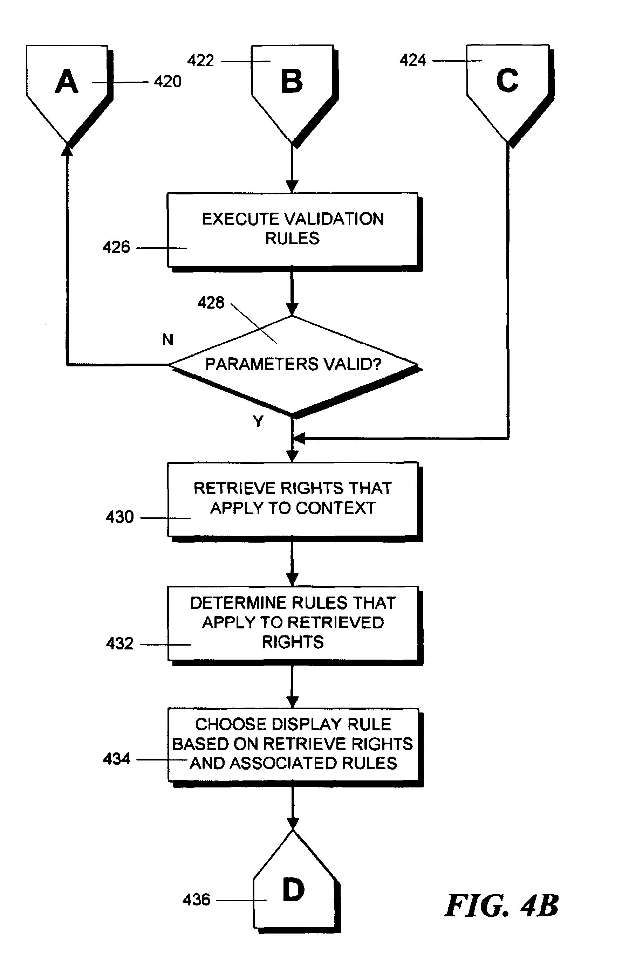

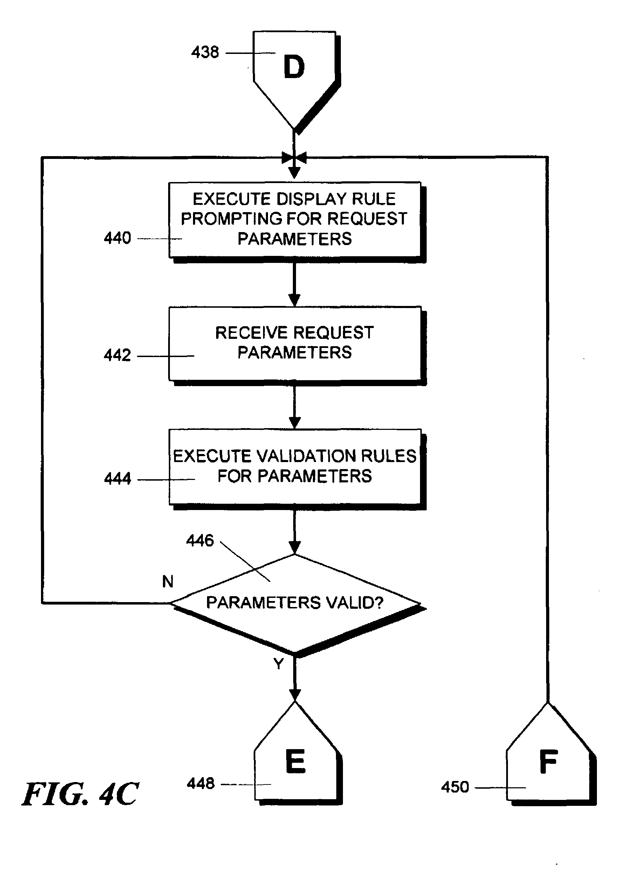

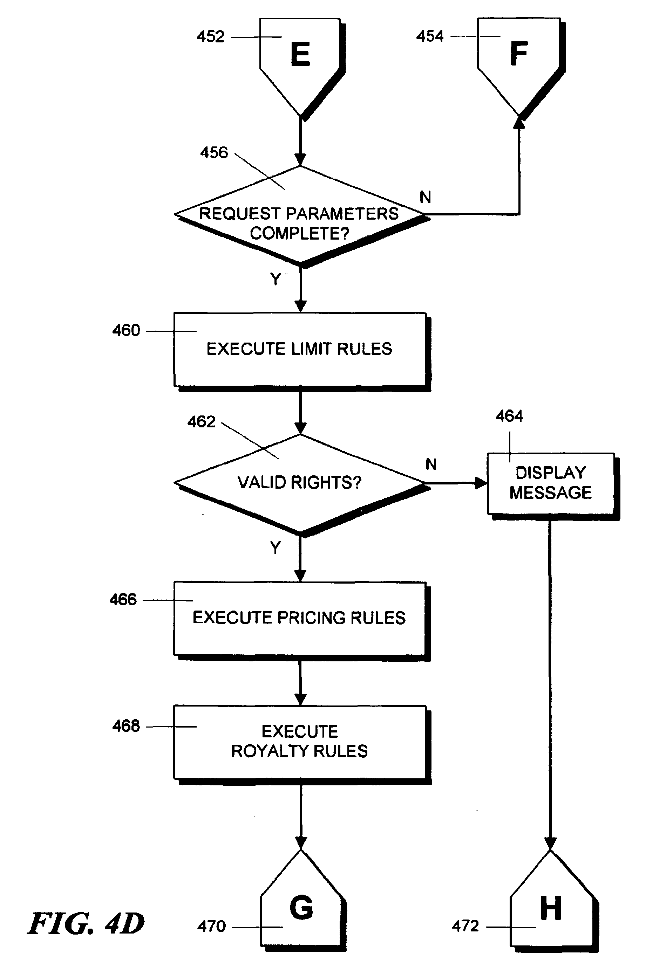

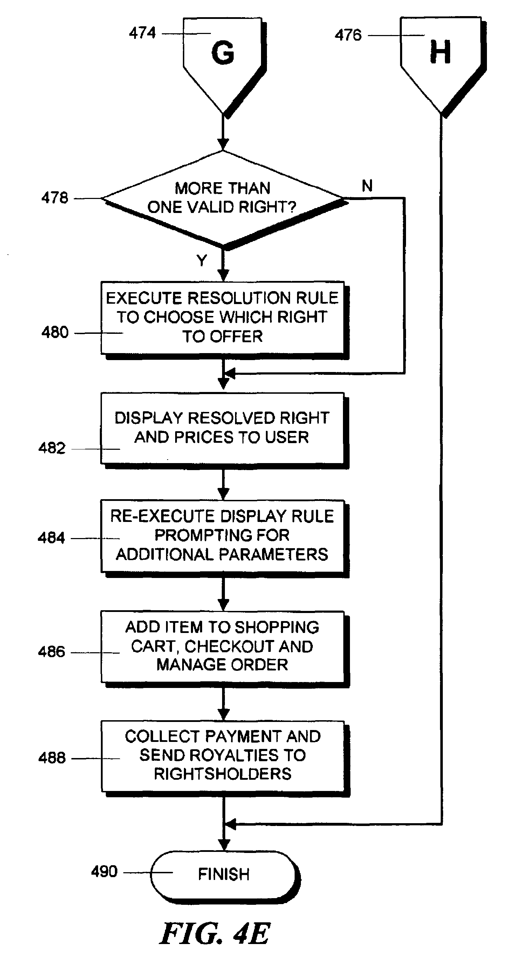

Figures 4A-4E, when placed together, form a flowchart that shows steps in an illustrative process that is performed by the rules engine in responding to a request for a right to be granted. During a rights request session, a RightsRequest object is created to hold information associated with the request. This information includes the type of use and work IDs entered by the user, the rights that have been determined to apply to the user request context, the state of the request, dynamically-determined request parameters, a display specification (values of the DisplayRow parameter), parameter values entered by the user, validation rule outcomes, limit rule outcomes, pricing/royalty rule calculation outcomes and various flags and pointers needed for rights resolution processing. All right-related rules take, as an input argument, the RightsRequest object so that each rule has access to the full request context. For example, a validation rule that validates the parameter value for NUMBER_OF_PAGES can use the RightsRequest object to access the parameter values for ARTICLE_START_PAGE and ARTICLE-END-PAGE during rule processing.

The request process starts in step 400 and proceeds to step 402 where, under control of the rules engine program, a graphic user interface display with conventional textbox and combobox controls is generated that prompts the user to enter basic context information including a work ID, an effective date and a type of use ID. Location information may optionally be requested from the user. From a user interaction standpoint there are multiple states to a request. Each state is associated with a "ready" flag that, when set to "true" indicates that state has been completed and the system is "ready" for the next state. These states include a starting state in which all "ready" flags are set to false. A boundary parameters ready flag is associated with a boundary parameters ready state and, when "true" indicates that all boundary parameters have been entered and validated so it is possible to retrieve applicable rights. In a resolution parameters ready state, a "true" value for the resolution parameters ready flag indicates that all resolution-related parameters have been entered and validated so it is possible to process right-related rules (limit, pricing, and royalty rules). If a shopping cart metaphor is used to collect user payments, in a cart parameters ready state, a "true" value of the associated flag indicates that all parameters have been entered and validated so it is possible to add the item to a shopping cart to allow the user to pay for the requested right.

In step 406, the type of use ID is used to access the tou_rule table 206 in the rules database and locate the associated display rule. If no display rule is associated with a type of use, a default display rule will be used that simply presents parameters in their display sequence order and uses default settings for each column. In general, a display rule executes to provide the graphic user interface instructions as to what input is required from the end-user by defining attributes of each row (displayRow) and row parameters (displayParm).

When the display rule is located, the rule_{_}parm table 214 is accessed with the rule ID and any boundary parameters are retrieved from the parm table 216. As previously mentioned, boundary parameters are required to determine whether rights applicable to the rights request context exist. In step 408, a determination is made whether such boundary parameters exist. If, in step 408, it is determined that boundary parameters do not exist, the process proceeds, via off-page connectors 418 and 424, to step 430 described below.

Alternatively, if in step 408, it is determined that boundary parameters exist, then the process proceeds to step 410 where the display rule previously located is executed. The display rule uses the DisplayRow and DisplayParm parameter values to display appropriate controls at specified locations on the graphic user interface in order to prompt the user to enter the boundary parameters. In step 412, the boundary parameters are received by the rules engine. The process then proceeds, via off-page connectors 416 and 422, to step 426 where validation rules associated with each parameter are executed. In step 428, a determination is made whether the entered parameter values are valid. If it is determined that the entered parameter values are not valid, then the process proceeds, via off-page connectors 420 and 414, back to step 410 where the display rule is re-executed in order to prompt the user to reenter the parameter values.

In step 430, in the absence of boundary parameters or after boundary parameter values have been collected and validated, the rules engine accesses the rights table 202 in order to retrieve rights that apply to the user context and the boundary parameters entered by the user. Any retrieved rights are placed in a rights array that contains each right and its related parameters. Then, in step 432, the rules engine accesses the right-rule table to determine the various right-related rules that apply to each retrieved right. In some cases, there is more than one rightsholder (and right-rule) associated with a right. In these cases, the rules engine supports two options. In the first option, a set of pricing (or special order), royalty, and limit rules are associated with each rightsholder and the total price becomes a sum of all prices calculated, royalties are parsed to each rightsholder based on the total price. If any limit associated with any rightsholder is reached, the entire right is invalid. In the second option, a single pricing rule is used for all rightsholders, the total price rule is calculated first, and then royalties are calculated for each rightsholder. If any limit at any level is reached, the entire right is invalid.

In step 434, the process determines which display rule to execute based on the combination of rights and related rules that apply to the context. A default display rule may be specified for each type of use or for combinations of rules to be evaluated. For example, pricing rule P1 and royalty rule R1 that require prompting for only a "Number of Pages" parameter value could be associated with a display rule D1. However, if the inclusion of another pricing rule P2 requires additional prompting of "Are you a commercial user?" parameter value, this latter rule group could be associated with a different display rule D2 that addresses the additional prompting required for the additional parameter value. Overall, the selection of a display rule is governed by the following order. First, if the rules being processed are all included in the set of rules associated with a display rule group for a type of use, that display rule is used. Alternatively, if the rules being processed are all included in the set of rules associated with a display rule group for a type of use parent, that display rule is used. If neither of the foregoing is applicable, the default rule for the type of use is used. If no such default rule is available, the default rule for the type of use parent is used. If no other rules are located, a system default display rule is used.

The process then proceeds, via off-page connectors 436 and 438, to step 440 where the display rule for the determined parameters is executed in order to prompt the user to enter the required values. The display rule will again use the DisplayRow and DisplayParm parameter values associated with the rule to present the request parameters needed for rights resolution to the user. In step 442, the request parameters are received and, in step 444, validation rules are run for the received parameters. If the parameters are determined by the validation rules not to be valid in step 446, the process returns to step 440 where the display rule is re-executed in order to prompt the user to reenter the required parameters.

Alternatively, if in step 446, the received parameters are determined to be valid, then the process proceeds, via off-page connectors 448 and 452, to step 456, where a determination is made whether entry of the request parameters has been completed. If entry has not been completed, the process proceeds, via off-page connectors 454 and 450, back to step 440 where the appropriate display rule is re-executed in order to prompt the user for further parameters. The rights related rules can only be run if the associated display rule sets the resolution parameters ready flag to "true" indicating that all right related rule parameters have been collected.

Alternatively, if in step 456, it is determined that all required request parameters have been received and validated, then the process proceeds to step 460 where limit rules for all retrieved rights are executed. Then, in step 462, a determination is made whether any valid rights remain after the limit rules have been executed. If no valid rights remain, then the process displays a message to the user that there are no valid rights available and the process proceeds, via off-page connectors 472 and 476 to finish in step 488.

Alternatively, if in step 462, it is determined that valid rights exist, these rights are entered into a valid rights list, then the process proceeds to step 466, where pricing rules for all rights that are still valid are executed and subsequently to step 468 where royalty rules for all valid rights are executed. The process then proceeds, via off-page connectors 470 and 474, to step 478 where a determination is made whether more than one valid right exists. If it is determined that only one valid right exits, a ResolvedRightsReady flag is set to indicate pricing is complete and the process proceeds to step 482, described below.

Alternatively, if it is determined in step 478 that more than one valid right exists, then in step 480, a rights resolution rule is executed to select one of the valid rights. The rights resolution rule sorts the selected rule to the top of the list of rights. In making a decision, the rights resolution rule may consider factors such as the priority of the right, the permission availability, whether restrictive terms exist, the price (highest or lowest), the royalty, the rightsholder and other factors. Once a right is chosen by the resolution rule, the ResolvedRightsReady flag is set to indicate pricing is complete.

When pricing is complete, the process displays the resolved right and prices to the user in step 482. At this point in step 484, a display rule associated with the pricing rule uses DisplayRow and DisplayParm parameter values in order to prompt the user to enter values for additional parameters that may be needed before executing conventional "shopping cart" software that displays a graphic user interface in order to allow the user to purchase the right. An item can only be added to a "shopping cart" if the latter display rule sets the cart parameters ready flag to "true" indicating that all required parameters have been collected.

In step 486, the rules engine provides the selected right, pricing, royalty, and related data elements to conventional shopping cart, checkout, and order management software that is responsible for billing, collection, and ultimately royalty payment as indicated in step 488. All aspects of the rules engine are date/version aware such that if the user desires to modify an order at a subsequent date, the system can find the same rights, rules, and parameters that were in effect on the date of the original order and re-process the same calculation with modified parameter values.

While the invention has been shown and described with reference to a number of embodiments thereof, it will be recognized by those skilled in the art that various changes in form and detail may be made herein without departing from the spirit and scope of the invention as defined by the appended claims.

### List of reference signs

- 100: rules database
- 102: signal, connection
- 104: memory, compiler
- 106: rules engine, signal, connection
- 108: devices, memory
- 110: display, signal, connection
- 112: rules engine
- 114: signal, connection
- 116: display
- 118: input devices
- 120: signal, connection
- 200: table
- 202: table
- 204: table
- 206: table
- 208: table
- 210: table
- 212: table
- 214: table
- 216: table
- 220: table
- 222: table
- 224: table
- 300: step
- 302: step
- 304: step
- 306: step
- 308: step
- 310: step
- 312: step
- 314: step
- 400: step
- 402: step
- 404: step
- 406: step
- 408: step
- 410: step
- 412: step
- 414: connector
- 416: connector
- 418: connector
- 420: connector
- 422: connector
- 424: connector
- 426: step
- 428: step
- 430: step
- 432: step
- 434: step
- 436: connector
- 438: connector
- 440: step
- 442: step
- 444: step
- 446: step
- 448: connector
- 450: connector
- 452: connector
- 454: connector
- 456: step
- 460: step
- 462: step
- 464: step
- 466: step
- 468: step
- 470: connector
- 472: connector
- 474: connector
- 476: connector
- 478: step
- 480: step
- 482: step
- 484: step
- 486: step
- 488: step
- 490: step

## Claims

1. A method for controlling a computer having a processor, a memory, a display and a user input device to respond to a request for a content use right, the method comprising:
(a) storing in the memory a plurality of right records, each right record representing a right for a predetermined type of content use;
(b) storing in the memory a plurality of display rule records, each display rule record being linked to a type of content use and having program code for controlling the display to prompt for at least one predetermined parameter and for receiving input from the input device representing a value for the parameter;
(c) storing in the memory a plurality of right rule records, each right rule record being linked to a right record and performing one of determining whether the linked right is granted, determining a price for the right and determining a royalty for the right; and
(d) controlling the processor with a rules engine program to select a display rule record for a requested content use and to run program code therein to obtain parameter values and execute program code in right rule records linked to the selected right to determine, based on the obtained parameter values, whether the right should be granted, the price for the right and the royalty for the right and subsequently, if applicable, selecting a single right from a plurality of valid rights
(e) comprising storing in the memory a plurality of parameter records, each parameter record defining a predetermined parameter value, and linking parameter records to right rule records so that when program code in a right rule record is executed, parameter values required by the executing program code are predefined by the linked parameter records.

2. The method of claim 1 wherein step (d) further comprises creating with the processor under control of the rules engine program, a request object containing a requested content use type and content work, any rights that have been determined to apply to the content user type, a state of the request, parameter values received from the input device and right rule results, wherein the request object is preferably provided as an input to program code in each of the right rule records.

3. The method of claim 1 further comprising storing a plurality of validation rule records in the memory, each validation rule record containing program code for validating information received from the user input device and linking each validation rule record to one of the parameter records.

4. The method of claim 1 wherein step (c) comprises storing in the memory a plurality of preprocess rule records, each preprocess rule record being linked to a rule record and containing program code for obtaining, prior to receiving information from the user input device, information necessary to determine whether the right should be granted.

5. The method of claim 1 wherein step (c) comprises storing in the memory a plurality of post process rule records, each post process rule record being linked to a rule record and containing program code for modifying an output generated by program code in the rule record in a predetermined manner.

6. The method of claim 1 further comprising storing a plurality of resolution rule records in the memory, each resolution rule record containing program code for selecting one right record from a plurality of right records that represent rights that have been determined to be applicable to the requested content use.

7. The method of claim 6 wherein step (d) comprises controlling the processor with the rules engine program to execute program code in at least one resolution rule record after determining whether a right should be granted and before calculating a price for a selected right.

8. The method of claim 1 wherein program code in each rule record is compiled and stored when edits are made.

9. The method of claim 1 wherein prior to step (d), program code in each rule record is retrieved from the memory and instantiated and resulting executable code is cached in the memory so that, in step (d), the rules engine executes the executable code.

10. The method of claim 1 wherein each right record, each right rule record, and each display rule record contains version information and obtained parameter values are stored in the memory so that step (d) can be performed and then repeated at a subsequent date with the same determination.

11. The method of claim 1 where obtained parameter values are stored in a request object in the memory and the request object is provided in step (d) to right rule records linked to the selected right so that all obtained parameter values are available to the right rule records linked to the selected right.

12. The method of claim 1 wherein in step (d), program code executed in a selected display rule record controls the display via display row values stored in the selected display rule and display parameter attributes stored in a parameter table linked to the selected display rule.

13. The method of claim 1 where each display rule and each right rule are subclasses of a base rule class containing a plurality of functions that can be used in program code associated with each rule

14. Apparatus for responding to a request for a content use right, the apparatus comprising a computer having a processor, a memory, a display and a user input device and program code stored in the memory that controls the processor to carry our a method of any of the claims 1 to 13.

15. Program code which, when executed on a computer, causes the computer to carry out a methods of any of the claims 1 to 13.

## Patentansprüche

1. Verfahren zum Steuern eines Computers mit einem Prozessor, einem Speicher, einem Display und einer Benutzer-Eingabeeinrichtung, um auf eine Anfrage nach einem Inhaltsbenutzungsrecht zu antworten, wobei das Verfahren umfasst:
(a) Speichern einer Vielzahl von Rechte- Einträgen in dem Speicher, wobei jeder Rechte-Eintrag ein Recht für einen vorgegebenen Typ von Inhaltsbenutzung darstellt;
(b) Speichern einer Vielzahl von Displayregel-Einträgen in dem Speicher, wobei jeder Displayregel- Eintrag mit einem Typ von Inhaltsbenutzung verknüpft ist und einen Programmcode hat, um das Display zu steuern, um nach wenigstens einem vorgegebenen Parameter abzufragen und um eine Eingabe von der Eingabeeinrichtung zu empfangen, die einen Wert für den Parameter darstellt;
(c) Speichern einer Vielzahl von Rechteregel-Einträgen in dem Speicher, wobei jeder Rechteregel-Eintrag mit einem Rechte-Eintrag verknüpft ist und festzustellen, ob das verknüpfte Recht erteilt wurde, oder einen Preis für das Recht festzustellen oder eine Lizenz für das Recht festzustellen; und
(d) Steuern des Prozessors mit einem Regel-Engine-Programm, um einen Displayregel-Eintrag für eine angeforderte Inhaltsbenutzung auszuwählen und um einen Programmcode darin auszuführen, um Parameterwerte zu erhalten und um den Programmcode in den Rechteregeln-Einträgen auszuführen, die mit dem ausgewählten Recht verknüpft sind, um auf der Basis der erhaltenen Parameterwerte festzustellen, ob das Recht erteilt werden sollte, um den Preis des Rechts und die Lizenz für das Recht festzustellen und um danach, gegebenenfalls, ein einziges Recht aus der Vielzahl der gültigen Rechte auszuwählen,
(e) umfassend Speichern einer Vielzahl von Parameter-Einträgen in dem Speicher, wobei jeder Parameter-Eintrag einen vorgegebenen Parameterwert definiert, und Verknüpfen der Parameter-Einträge mit den Rechteregel-Einträgen, sodass, wenn der Programmcode in einem Rechteregel-Eintrag ausgeführt wird, Parameterwerte, die von dem Ausführungsprogrammcode benötigt werden, durch die verknüpften Parameter-Einträge vordefiniert sind.

2. Verfahren nach Anspruch 1, worin Schritt (d) ferner umfasst das Erzeugen mit dem Prozessor unter der Steuerung des Regel-Engine-Programms eines Anfrageobjekts, welches enthält einen angeforderten Inhaltsbenutzungstyp und ein Inhaltswerk, jegliche Rechte, von denen vorbestimmt worden ist, dass sie auf einen Inhaltsbenutzungstyp, einen Zustand der Anfrage, Parameterwerte, die von der Eingabeeinrichtung erhalten werden, und auf Rechteregel-Ergebnisse zutreffen, wobei das Anfrageobjekt vorzugsweise als eine Eingabe in den Programmcode in jedem der Rechteregel-Einträgen bereitgestellt wird.

3. Verfahren nach Anspruch 1 ferner umfassend das Speichern einer Vielzahl von Validierungsregel-Einträgen in dem Speicher, wobei jeder Validierungsregel-Eintrag einen Programmcode enthält, um eine Information, die von der Benutzer-Eingabeeinrichtung enthalten wird, zu validieren und jeden Validierungsregel-Eintrag mit einem der Parameter-Einträge zu verknüpfen.

4. Verfahren nach Anspruch 1, worin Schritt (c) das Speichern in dem Speicher einer Vielzahl von Vorverarbeitungsregel-Einträgen umfasst, wobei jeder Vorverarbeitungsregel-Eintrag mit einem Regel-Eintrag verknüpft ist und einen Programmcode enthält, um vor dem Empfang der Informationen von der Benutzer-Eingabeeinrichtung eine Information zu erhalten, die erforderlich ist, um festzustellen, ob das Recht erteilt werden sollte.

5. Verfahren nach Anspruch 1, worin Schritt (c) umfasst das Speichern in dem Speicher einer Vielzahl von Nachbearbeitungsregel-Einträgen, wobei jeder Nachverarbeitungsregel-Eintrag mit einem Regel-Eintrag verknüpft ist und einen Programmcode enthält, um einen Ausgang, der durch einen Programmcode in dem Regel-Eintrag erzeugt wird, in einer vorgegebenen Weise zu modifizieren.

6. Verfahren nach Anspruch 1, ferner umfassend das Speichern einer Vielzahl von Auflösungsregel-Einträgen in dem Speicher, wobei jeder Auflösungsregel-Eintrag einen Programmcode enthält, um einen Eintrag aus einer Vielzahl von Rechte-Einträgen, die Rechte repräsentieren, auszuwählen, von denen festgestellt worden ist, dass sie auf den angeforderten Inhaltsbenutzung anwendbar sind.

7. Verfahren nach Anspruch 6, wobei Schritt (d) umfasst das Steuern des Prozessors mit dem Regel-Engine-Programm, um den Programmcode in wenigstens einem Auflösungsregel-Eintrag auszuführen, nachdem festgestellt worden ist, ob ein Recht erteilt werden sollte und bevor ein Preis für ein ausgewähltes Recht berechnet wird.

8. Verfahren nach Anspruch 1, worin der Programmcode in jedem Rechte-Eintrag kompiliert und gespeichert wird, wenn Bearbeitungen gemacht werden.

9. Verfahren nach Anspruch 1, worin vor Schritt (d) ein Programmcode in jedem Rechte-Eintrag von dem Speicher zurückgewonnen und installiert wird und der resultierende, ausführbare Code in dem Speicher gecatched wird, sodass im Schritt (d) die Regel-Engine das ausführbare Programm ausführt.

10. Verfahren nach Anspruch 1, worin jeder Rechte-Eintrag, jeder Rechteregel-Eintrag und jeder Displayregel-Eintrag eine Versionsinformation enthält, und worin erhaltene Parameterwerte in dem Speicher gespeichert werden, sodass der Schritt (d) ausgeführt und dann an einem nachfolgenden Datum mit derselben Bestimmung wiederholt wird.

11. Verfahren nach Anspruch 1, worin erhaltende Parameterwerte in einem Anfrageobjekt in dem Speicher gespeichert werden, und wobei das Anforderungsobjekt im Schritt (d) an Rechteregel-Einträge geliefert wird, die mit dem ausgewählten Recht verknüpft sind, sodass alle erhaltenen Parameterwerte für die Rechteregel-Einträge, die mit dem ausgewählten Recht verknüpft sind, zur Verfügung stehen.

12. Verfahren nach Anspruch 1 worin im Schritt (d) ein Programmcode, der in einem ausgewählten Displayregel-Eintrag ausgeführt wird, das Display über Displayzeilenwerte, die in der ausgewählten Displayregel gespeichert sind, und Displayparameter-Attribute steuert, die in einer Parametertabelle gespeichert sind, die mit der ausgewählten Displayregel verknüpft ist.

13. Verfahren nach Anspruch 1 worin jede Displayregel und jede Rechteregel Unterklassen einer Basisregelklasse sind, die eine Vielzahl von Funktionen enthält, die in dem jeder Regel zugeordneten Programmcode benutzt werden können.

14. Einrichtung zur Antwort auf eine Anfrage für ein Inhaltsbenutzungsrecht, wobei die Einrichtung einen Computer mit einem Prozessor, einen Speicher, ein Display und eine Benutzer-Eingabeeinrichtung und einen in dem Speicher gespeicherten Programmcode aufweist, der den Prozessor steuert, um ein Verfahren nach einigen Ansprüchen 1 bis 13 auszuführen.

15. Programmcode, der, wenn er auf einem Computer ausgeführt wird, den Computer veranlasst, ein Verfahren nach einigen Ansprüche 1 bis 13 auszuführen.

## Revendications

1. Procédé de commande un ordinateur ayant un processeur, une mémoire, un dispositif d'affichage et un dispositif d'entrée d'utilisateur pour répondre à une demande pour un droit d'utilisation de contenu, le procédé comprenant:
(a) stocker dans la mémoire une pluralité d'enregistrements de droits, chaque enregistrement de droits représentant un droit pour un type prédéterminé d'utilisation de contenu;
(b) stocker dans la mémoire une pluralité d'enregistrements de règles d'affichage, chaque enregistrement de règle d'affichage étant lié à un type d'utilisation de contenu et ayant le code de programme pour commander l'affichage au prompt pour au moins un paramètre prédéterminé et pour recevoir l'entrée à partir du dispositif d'entrée représentant une valeur pour le paramètre;
(c) stocker dans la mémoire une pluralité d'enregistrements de règles de droit, chaque enregistrement de règle de droit étant lié à un enregistrement de droits et réaliser l'un d'entre déterminer si le droit lié est accordé, déterminer un prix pour le droit et déterminer un droit d'auteur pour le droit; et
(d) commander le processeur avec un programme pour moteur de règles pour sélectionner un enregistrement de règle d'affichage pour une utilisation de contenu exigé et pour y rouler le code de programme pour obtenir les valeurs des paramètres et exécuter le code de programme dans les enregistrements de règles de droit liés au droit sélectionné pour déterminer, basé sur les valeurs des paramètres obtenus, si le droit devrait être accordé, le prix pour le droit et le droit d'auteur pour le droit et subséquemment, s'il est applicable, sélectionner un seul droit de la pluralité de droits valides
(e) stocker dans la mémoire une pluralité d'enregistrements de paramètres, chaque enregistrement de paramètres définissant une valeur de paramètre prédéterminé, et lier les enregistrements de paramètres aux enregistrements de règles de droit de sorte qu'alors quand un code de programme dans un enregistrement de règles de droit soit réalisé, les valeurs des paramètres exigés par le code de programme sont prédéfinies par les enregistrements de paramètres liés.

2. Procédé selon la revendication 1 où l'étape (d) comprend de plus créer avec le processeur sous la commande du programme pour moteur de règles, un objet de demande contenant un type d'utilisation de contenu exigé et le travail de contenu, tous les droits qui ont été déterminés pour appliquer au type d'utilisation de contenu, un état de la demande, les valeurs des paramètres reçus du dispositif d'entrée et les résultats des règles de droit, où l'objet de demande est préférablement pourvu comme une entrée au code de programme dans chacune d'entre les enregistrements de règles de droit.

3. Procédé selon la revendication 1 comprenant de plus stocker une pluralité d'enregistrements de règles de validation dans la mémoire, chaque enregistrement de règles de validation contenant le code de programme pour valider l'information reçue du dispositif d'entrée d'utilisateur et lier chaque enregistrement de règles de validation à l'un d'entre les enregistrements de paramètres.

4. Procédé selon la revendication 1 où l'étape (c) comprend de plus stocker dans la mémoire une pluralité d'enregistrements de règles de prétraitement, chaque enregistrement de règles de prétraitement étant lié à un enregistrement de règle et comprenant le code de programme pour obtenir, avant de recevoir l'information à partir du dispositif d'entrée d'utilisateur, l'information nécessaire pour déterminer si le droit devrait être accordé.

5. Procédé selon la revendication 1 où l'étape (c) comprend stocker dans la mémoire une pluralité d'enregistrements de règles post traitement, chaque enregistrement de règles post traitement étant lié à un enregistrement de règles et comprenant le code de programme pour modifier une sortie générée par le code de programme dans l'enregistrement de règles d'une manière prédéterminée.

6. Procédé selon la revendication 1 comprenant de plus stocker une pluralité d'enregistrements de règles de résolutions dans la mémoire, chaque enregistrement de règles de résolution contenant le code de programme pour sélectionner un enregistrement de droit de la pluralité d'enregistrements de droits qui représentent les droits qui ont été déterminés pour être applicables à l'utilisation de contenu exigé.

7. Procédé selon la revendication 6 où l'étape (d) comprend commander le processeur avec le programme pour moteur de règles pour réaliser le code de programme dans au moins un enregistrement de règles de résolution après la détermination si un droit devrait être accordé et avant calculer un prix pour un droit sélectionné.

8. Procédé selon la revendication 1 où le code de programme en chaque enregistrement de règles est compilé et stocké quand les modifications sont faites.

9. Procédé selon la revendication 1 où avant l'étape (d), le code de programme en chaque enregistrement de règles est récupéré de la mémoire et instancié et le code exécutable résultant est mis en cache dans la mémoire de sorte que, dans l'étape (d), le moteur de règles exécute le code exécutable.

10. Procédé selon la revendication 1 où chaque enregistrement de droits, chaque enregistrement de règles de droit, et chaque enregistrement de règles d'affichage comprend la version d'information et les valeurs des paramètres obtenus sont stockées dans la mémoire de sorte que l'étape (d) puisse être réalisée et puis répétée à une date ultérieure avec la même détermination.

11. Procédé selon la revendication 1 où, les valeurs des paramètres obtenus sont stockées dans un objet de demande dans la mémoire et l'objet de demande est pourvu dans l'étape (d) aux enregistrements de règles de droit liés au droit sélectionné de sorte que toutes les valeurs des paramètres obtenus sont disponibles aux enregistrements de règles de droit liés au droit sélectionné.

12. Procédé selon la revendication 1 où dans l'étape (d), le code de programme exécuté dans un enregistrement de règles d'affichage sélectionné commande l'affichage par les valeurs de ligne d'affichage stockées dans la règle d'affichage sélectionnée et les attributs des paramètres d'affichage stockés dans un tableau de paramètres lié à la règle d'affichage sélectionnée.

13. Procédé selon la revendication 1 où chaque règle d'affichage et chaque règle de droit sont les sous-classes d'une classe de règles de base contenant une pluralité de fonctions qui peuvent être utilisées dans le code de programme associé avec chaque règle.

14. Appareil pour répondre à une demande pour un droit d'utilisation de contenu, l'appareil comprenant un ordinateur ayant un processeur, une mémoire, un dispositif d'affichage et un dispositif d'entrée d'utilisateur et le code de programme stocké dans la mémoire qui commande le processeur pour réaliser un procédé selon l'une quelconque des revendications 1 à 13.

15. Code de programme qui, quand exécuté sur un ordinateur, cause à l'ordinateur réaliser un procédé selon l'une quelconque des revendications 1 à 13.
